(19) Europäisches Patentamt

European Patent Office

Office européen des brevets

(11) **EP 1 206 498 B1**

(12) **EUROPÄISCHE PATENTSCHRIFT**

(45) Veröffentlichungstag und Bekanntmachung des Hinweises auf die Patenterteilung:
**10.12.2003  Patentblatt 2003/50**

(51) Int Cl.7: **C08G 65/10**, C08G 65/30, C08G 18/48

(21) Anmeldenummer: **00954562.5**

(22) Anmeldetag: **25.07.2000**

(86) Internationale Anmeldenummer:
**PCT/EP00/07097**

(87) Internationale Veröffentlichungsnummer:
**WO 01/010933 (15.02.2001 Gazette 2001/07)**

(54) **VERFAHREN ZUR HERSTELLUNG VON POLYETHERPOLYOLEN**

METHOD FOR PREPARING POLYETHERPOLYOLS

PROCEDE DE PREPARATION DE POLYETHERPOLYOLS

(84) Benannte Vertragsstaaten:
**AT BE CH CY DE DK ES FI FR GB GR IE IT LI LU MC NL PT SE**
Benannte Erstreckungsstaaten:
**RO**

(30) Priorität: **06.08.1999  DE 19937114**

(43) Veröffentlichungstag der Anmeldung:
**22.05.2002  Patentblatt 2002/21**

(73) Patentinhaber: **Bayer Aktiengesellschaft**
**51368 Leverkusen (DE)**

(72) Erfinder:
• **EHLERS, Stephan**
  **D-50676 Köln (DE)**
• **HOFMANN, Jörg**
  **D-47829 Krefeld (DE)**
• **DIETRICH, Manfred**
  **D-51373 Leverkusen (DE)**
• **GUPTA, Pramod**
  **D-50181 Bedburg (DE)**
• **STEINLEIN, Christian**
  **D-40882 Ratingen (DE)**
• **ZWICK, Horst**
  **D-41539 Dormagen (DE)**

(56) Entgegenhaltungen:
EP-A- 0 892 002          WO-A-99/19063
US-A- 5 689 012

**Beschreibung**

Die Erfindung betrifft ein Verfahren zur Herstellung von Polyetherpolyolen mittels Doppelmetallcyanid (DMC)-Katalyse, bei dem die Induktionsphase deutlich verkürzt ist.

Nach dem Stand der Technik werden Polyetherpolyole durch Polyaddition von Alkylenoxiden an Starterverbindungen mit aktiven Wasserstoffatomen mittels Metall-Hydroxid-Katalyse (z.B. KOH) hergestellt, s. Ullmanns Encyclopädie der technischen Chemie, Bd. 14, 1963, S. 49 ff. Die Reaktionsgeschwindigkeiten der Polyaddition sind bei diesem Verfahren sehr klein. Je nach Reaktionstemperatur, Katalysatorkonzentration und OH-Zahl des hergestellten Polyetherpolyols kommt es bei dem Verfahren nach dem Stand der Technik zusätzlich zur Bildung von monofunktionellen Polyethern mit endständigen Doppelbindungen, sogenannten Monoolen, die die Verwendung des Produkts für spätere Polyurethan-Anwendungen einschränken. Darüber hinaus muss nach der Polyaddition die eingesetzte Base entfernt werden. Dies kann z.B. entweder durch die Zugabe von Säuren, durch den Einsatz von neutralisierenden Adsorbem, Ionenaustauscher oder mit anderen Verfahren erfolgen. Das dabei entstehende Neutralisationswasser und die gebildeten Salze müssen ebenfalls vor der Weiterverarbeitung abgetrennt werden. Diese kurze Beschreibung des nach dem heutigen Stand der Technik eingesetzten Verfahrens verdeutlicht die aufwendige und kostenintensive Herstellung von Polyetherpolyolen.

Doppelmetallcyanid(DMC)-Katalysatoren für die Herstellung von Polyetherpolyolen sind seit langem bekannt (siehe beispielsweise US-A 3 404 109, US-A 3 829 505, US-A 3 941 849 und US-A 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels basischer Katalysatoren. Die so erhaltenen Polyetherpolyole können zu hochwertigen Polyurethanen (z.B. Elastomeren, Schäumen, Beschichtungen) verarbeitet werden. Verbesserte DMC-Katalysatoren, wie sie z.B. in EP-A 700 949, EP-A 761 708, WO 97/40086, WO 98/16310, DE-A 197 45 120, DE-A 197 57 574 und DE-A 198 10 269 beschrieben sind, besitzen zudem eine außerordentlich hohe Aktivität und ermöglichen die Herstellung von Polyetherpolyolen bei sehr geringer Katalysatorkonzentration (25 ppm oder weniger), so dass eine Abtrennung des Katalysators aus dem Polyol nicht mehr erforderlich ist.

Nachteilig bei der DMC-katalysierten Polyetherpolyol-Herstellung sind die zum Teil langen Induktionszeiten. Während dieser Phase erfolgt der Kettenaufbau nur sehr langsam, so dass nur eine sehr schlechte Raum-Zeit-Ausbeute erzielt wird. Dies wiederum bedeutet eine Reduktion des wirtschaftlichen Vorteils, der sich im Vergleich zum KOH-katalysierten Verfahren durch die schnellere Polyaddition und durch die wesentlich vereinfachte Produktaufarbeitung ergibt.

Eine Möglichkeit die Induktionszeiten zu reduzieren, besteht in der Erhöhung der Alkylenoxidkonzentration im Reaktor. Eine hohe Konzentration an freiem Alkylenoxid stellt jedoch ein großes Gefahrenpotential dar, da es bei der Aktivierung des Katalysators zu einer verstärkten Wärmefreisetzung und somit zu unkontrollierten Temperaturerhöhungen kommen kann. Dies würde zu größeren thermischen Belastungen des Polyols führen, so dass es zum einen zu einer Beeinträchtigung der Produktqualität kommen könnte, z.B. aufgrund höherer Viskositäten oder verbreiterter Molekulargewichtsverteilungen und zum anderen könnte die Katalysatoraktivität durch eine beschleunigte Alterung herabgesetzt werden. Im Extremfall kann eine unkontrollierte Temperaturerhöhung sogar zu einer adiabatischen thermischen Zersetzung des Polyetherpolyols führen.

Aufgrund der im vorherigen Abschnitt beschriebenen Schwierigkeiten wird normalerweise (s. z. B. WO 97/23544) der Reaktor nur mit einem Teil der für die Umsetzung zum Polyol notwendigen Gesamtmenge an Alkylenoxid beschickt. Anschließend wird abgewartet, bis ein deutlicher Druckabfall im Reaktor signalisiert, dass der Katalysator vollständig aktiviert ist, bevor dem Reaktor weiteres Alkylenoxid zugeführt wird.

US-A-5 689 012 offenbart ein kontinuierliches Verfahren zur Herstellung von Polyetherpolyolen unter Verwendung von DMC-katalysatoren.

Es wurde nun überraschenderweise gefunden, dass sich die Induktionsphase bei der DMC katalysierten Polyetherpolyol-Herstellung deutlich verkürzen lässt, wenn dem Reaktor auch während der Induktionsphase kontinuierlich kleine Mengen an Alkylenoxid zugeführt werden, so viel, dass im Reaktor ein konstanter Druck herrscht. Die zur Aktivierung verwendete Menge an freiem Alkylenoxid sollte sich dabei entweder an der maximal zulässigen Reaktortemperatur ($T_{max}$) oder, falls diese oberhalb der Zersetzungstemperatur des herzustellenden Polyetherpolyols liegt, an dessen Zersetzungstemperatur ($T_{max}$) orientieren. Die Grenzkonzentration ($C_{Grenz}$) an freiem Alkylenoxid im Reaktor kann in Abhängigkeit von der Reaktionstemperatur ($T_{Reaktion}$) und der Reaktionsenthalpie ($\Delta H_R$) nach der folgenden Formel berechnet werden:

$$C_{Grenz} \leq \frac{T_{max} - T_{Reaktion}}{\Delta H_R}$$

Gegenstand der Erfindung ist daher ein Verfahren zur Herstellung von Polyetherpolyolen durch DMC-katalysierte Polyaddition von Alkylenoxiden an Starterverbindungen mit aktiven Wasserstoffatomen, bei dem während der Induktionsphase dem Reaktor kontinuierlich Alkylenoxid zugeführt wird. Bevorzugt wird die gesamte für die Herstellung der Polyetherpolyole benötigte Menge an Starterverbindung und Katalysator zu Beginn der Reaktion im Reaktor vorgelegt. Die Zugabe des Alkylenoxids erfolgt so, dass während der Induktionsphase der Druck im Reaktor konstant gehalten wird.

Die Aktivierung des DMC-Katalysators erfolgt während der Induktionsphase im allgemeinen bei Temperaturen von 20 bis 200°C, bevorzugt im Bereich von 40 bis 180°C, besonders bevorzugt bei Temperaturen von 50 bis 150°C. Die Reaktion kann in dieser Phase bei Gesamtdrücken von 0,001 bis 20 bar, bevorzugt bei Gesamtdrücken von 0,5 bis 10 bar und besonders bevorzugt bei Gesamtdrücken von 1 bis 6 bar, durchgefüht werden.

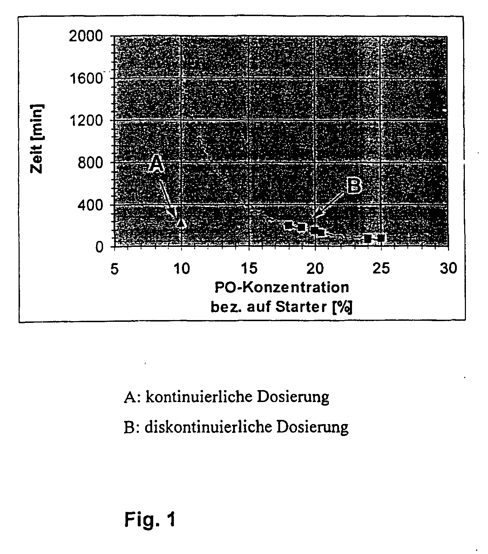

Die Induktionszeit ist dadurch gekennzeichnet, dass nur sehr kleine Mengen an Alkylenoxid zudosiert werden müssen, um den Reaktordruck konstant zu halten. Die Aktivität des Katalysators nimmt in dieser Phase langsam zu, so dass die zudosierte Menge allmählich gesteigert werden kann. Die vollständige Aktivierung des Katalysators ist daran erkennbar, dass die Dosierrate an Alkylenoxid deutlich gesteigert werden kann, ohne dass gleichzeitig ein Druckanstieg im Reaktor beobachtet wird. Nach vollständiger Aktivierung des Katalysators beginnt die Polyaddition, die häufig so schnell verläuft, dass die Dosierrate nur noch durch die Wärmeübertragungsleistung des Reaktors oder eines außenliegenden Wärmeübertragers limitiert wird. Fig. 1 zeigt, dass mit diesem Verfahren im Vergleich zur diskontinuierlichen Dosierung eine deutlich schnellere Aktivierung des Katalysators erreicht werden kann.

Mit einem Gehalt von 10 Gew.-% freiem Alkylenoxid, bezogen auf die Masse des eingesetzten Starters kann bei kontinuierlicher Dosierung eine Induktionszeit erreicht werden, die mit einem Gehalt von ca. 18 Gew.-% bei diskontinuierlicher Dosierung vergleichbar ist. Im Anschluss an die Induktionszit des Katalysators folgt die Alkoxylierungsphase des DMC-Gemisches. In dieser Phase wird die Reaktion im allgemeinen nicht mehr über den Reaktordruck, sondern über die Reaktortemperatur gesteuert. Die Dosierrate wird aufgrund der hohen Aktivität des Katalysators daher häufig durch die Wärmeübertragungsleistung des Reaktors oder eines im By-Pass geschalteten Wärmeüberträgers limitiert.

Die für das erfindungsgemäße Verfahren geeigneten DMC-Katalysatoren sind im Prinzip bekannt und im oben angeführten Stand der Technik ausführlich beschrieben. Bevorzugt eingesetzt werden verbesserte, hochaktive DMC-Katalysatoren, die z.B. beschrieben sind in EP-A 700 949, EP-A 761 708, WO 97/40086, WO 98/16310, DE-A 197 45 120, DE-A 197 57 574 und DE-A 198 10 269. Ein typisches Beispiel sind die in DE-A 198 10 269 beschriebenen DMC-Katalysatoren, die neben einer Doppelmetallcyanid-Verbindung (z.B. Zinkhexacyanocobaltat(III)) und einem organischen Komplexliganden (z.B. tert.-Butanol) noch einen Ehtylenoxid-Polyether mit einem zahlenmittlerem Molekulargewicht größer 500 g/mol enthalten.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder auch statistisch oder blockweise mit 2 oder 3 unterschiedlichen monomeren Epoxiden erfolgen. Näheres ist "Ullmanns Encyclopädie der industriellen Chemie", Band A21, 1992, S. 670f. zu entnehmen.

Als Starterverbindungen mit aktiven Wasserstoffatomen werden vorzugsweise Verbindungen mit Molekulargewichten von 18 bis 2.000 g/mol, bevorzugt 200 bis 2.000 g/mol und 1 bis 8, bevorzugt 2 bis 6 Hydroxylgruppen eingesetzt. Beispielhaft genannt seien Butanol, Ethylenglykol, Diethylenglykol, Triethylenglykol, 1,2-Propylenglykol, 1,4-Butandiol, 1,6-Hexandiol, Bisphenol-A, Trimethylolpropan, Glycerin, Pentaerythrit, Sorbit, Rohrzucker, abgebaute Stärke oder Wasser.

Vorteilhafter werden solche Starterverbindungen mit aktiven Wasserstoffatomen eingesetzt, die z.B. durch konventionelle Alkalikatalyse aus den zuvor genannten niedermolekularen Startern hergestellt wurden und oligomere Alkoxylierungsprodukte darstellen mit zahlenmittleren Molekulargewichten von 200 bis 2.000 g/mol.

Bevorzugt werden oligomere propoxylierte Starterverbindungen mit 1 bis 8 Hydroxylgruppen, besonders bevorzugt von 2 bis 6 Hydroxylgruppen, und zahlenmittleren Molekulargewichten von 200 bis 2.000 g/mol eingesetzt. Diese Verbindungen sind beispielsweise gemäß "Ullmanns Encyclopädie der industriellen Chemie, Band A21, 1992, S. 670f." herstellbar.

Die DMC-katalysierte Polyaddition des Alkylenoxids an die Starterverbindungen erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0,001 bis 20 bar durchgeführt werden. Die Polyaddition kann in Substanz oder in einem inerten, organischen Lösungsmittel, wie Toluol oder THF, durchgeführt werden. Die Menge an Lösungsmittel beträgt üblicherweise 10 bis 30 Gew.-%, bezogen auf die Menge des herzustellenden Polyetherpolyols.

Die DMC-Katalysatorkonzentration wird so gewählt, dass unter den gegebenen Reaktionsbedingungen eine gute Beherrschung der Polyadditionsreaktion möglich ist. Die Katalysatorkonzentration liegt im allgemeinen im Bereich von 0,0005 Gew.-% bis 1 Gew.-%, bevorzugt im Bereich von 0,001 Gew.-% bis 0,1 Gew.-%, besonders bevorzugt im Bereich von 0,001 bis 0,01 Gew.-%, bezogen auf die Menge des herzustellenden Polyetherpolyols.

Die Molekulargewichte der nach dem erfindungsgemäßen Verfahren hergestellten Polyetherpolyole liegen im Bereich zwischen 1.000 und 100.000 g/mol, bevorzugt im Bereich von 1.500 bis 50.000 g/mol, besonders bevorzugt im Bereich von 2.000 bis 20.000 g/mol.

Hochmolekulare Polyetheralkohole haben als Ausgangsprodukte für die Herstellung von Polyurethanen große Bedeutung. Je nach Molekulargewicht und Funktionalität werden sie bevorzugt zur Herstellung von Elastomeren, Prepolymeren für Dispersionen, Weichschaumstoffen und Polyurethan-Lacken eingesetzt.

## Beispiele

Herstellung von hochaktivem DMC-Katalysator (Synthese gemäß EP-A 700 949)

Eine Lösung von 12,5 g (91,5 mMol) Zinkchlorid in 20 ml deionisiertem Wasser gibt man unter starkem Rühren (24.000 U/min) zu einer Lösung von 4 g (12 mMol) Kaliumhexacyanocobaltat in 70 ml deionisiertem Wasser. Sofort danach wird eine Mischung aus 50 g tert.-Butanol und 50 g deionisiertem Wasser zur gebildeten Suspension gegeben und anschließend 10 min lang stark gerührt (24.000 U/min). Dann wird eine Mischung aus 1 g Polypropylenglykol mit zahlenmittlerer Molmasse 2.000 g/mol, 1 g tert.-Butanol und 100 g deionisiertem Wasser zugegeben und 3 min gerührt (1.000 U/min). Der Feststoff wird durch eine Filtration isoliert, dann 10 min mit einer Mischung aus 70 g tert.-Butanol, 30 g deionisiertem Wasser und 1 g des obigen Polypropylenglykols gerührt (10.000 U/min) und erneut filtriert. Abschließend wird noch einmal 10 min mit einer Mischung aus 100 g tert.-Butanol und 0,5 g des obigen Polypropylenglykols gerührt (10.000 U/min). Nach Filtration wird der Katalysator bei 50°C und Normaldruck bis zur Gewichtskonstanz getrocknet.

Ausbeute an getrocknetem, pulverförmigem Katalysator: 6,23 g

## Beispiel 1

Herstellung von Polyetherpolyolen mit kontinuierlicher Dosierung von Propylenoxid

2696 g eines Polyethers der Molmasse 416 g/mol und 0,4 g DMC-Katalysator werden in einem 20l Reaktor vorgelegt und auf 105°C aufgeheizt. Nachdem der Reaktor inertisiert wurde, werden 268 g Propylenoxid (entspricht 10 % des eingesetzten Starters) hinzugegeben. Der Druck beträgt anschließend 2,3 bar absolut. Dieser Druck wird während der Aktivierungsphase durch kontinuierliche Dosierung von Propylenoxid konstant gehalten. Die vollständige Aktivierung des Katalysators (entspricht dem Ende der Induktionszeit) ist an einer deutlichen Steigerung der Dosierrate erkennbar. Die Temperatur wird während der Reaktion konstant gehalten. Nach der Aktivierung des Katalysators wird die verbleibende Propylenoxidmenge (10000g) mit einer Dosierrate von 4,6 kg/h zugegeben. Der auf diese Weise hergestellte Polyether hat eine Viskosität $\eta$ = 384 mPas (25°C), OH-Zahl = 55,3 mg KOH/g, Doppelbindungsgehalt = 5 mmol/kg. Die Induktionszeit beträgt 224 min.

## Beispiel 2 (Vergleichsbeispiel)

Herstellung von Polyetherpolyolen mit diskontinuierlicher Dosierung von Propylenoxid während der Induktionsphase

2724 g eines Polyethers der Molmasse 416 g/mol und 0,4 g DMC-Katalysator werden in einem 20l Reaktor vorgelegt und auf 105°C aufgeheizt. Nachdem der Reaktor inertisiert wurde, werden 545 g Propylenoxid (entspricht 20 Gew.-%, bezogen auf die Masse des eingesetzten Starters) hinzugegeben. Der Druck beträgt anschließend 3,4 bar absolut. Die Aktivierung des Katalysators ist an einem beschleunigten Druckabfall erkennbar. Die Temperatur wird während der Reaktion konstant gehalten. Nach der Aktivierung des Katalysators wird die verbleibende Propylenoxidmenge (10234 g) mit einer Dosierrate von 4,6 kg/h zugegeben. Der auf diese Weise hergestellte Polyether weist folgende Eigenschaften auf: Viskosität $\eta$ = 382 mPas (25°C), OH-Zahl = 55,2 mg KOH/g, Doppelbindungsgehalt = 5 mmol/kg. Die Induktionszeit beträgt 144 min.

Weitere Vergleichsversuche mit dieser Dosiervariante zeigen, dass mit einer Erhöhung der Konzentration an freiem Propylenoxid im Reaktor zwar die Aktivierungszeit reduziert werden kann, jedoch auf Kosten der Sicherheit des Systems. Die Reduktion der Alkylenoxidkonzentration auf z.B. 10 Gew.-% ist bei der diskontinuierlichen Verfahrensvariante nicht sinnvoll, da die Induktionszeiten in diesem Fall so groß werden, dass nur noch kaum oder gar kein wirtschaftlicher Nutzen mehr besteht. Wie in Fig. 1 gezeigt wird, kann mit dem erfindungsgemäßen Verfahren die Konzentration an freiem Alkylenoxid für die Katalysatoraktivierung bei den gegebenen Reaktionsbedingungen problemlos auf 10 Gew.-% reduziert werden, wobei Aktivierungszeiten erhalten werden, die mit denen der diskontinuierlichen Aktivierung mit ca. 18 Gew.-% Alkylenoxid, bezogen auf die Masse des eingesetzten Starters, vergleichbar sind.

## Patentansprüche

1. Verfahren zur Herstellung von Polyetherpolyolen durch DMC-katalysierte Polyaddition von Alkylenoxiden an Starterverbindungen mit aktiven Wasserstoffatomen, bei dem während der Induktionsphase dem Reaktor kontinuierlich Alkylenoxid zugeführt und des Druck im Reaktor konstant gehalten wird.

2. Verfahren gemäß Anspruch 1, bei dem die gesamte für die Herstellung der Polyetherpolyole benötigte Menge an Starterverbindung und Katalysator zu Beginn der Reaktion im Reaktor vorgelegt wird.

3. Verfahren gemäß Anspruch 1 oder 2, bei dem Starterverbindungen mit 1 bis 8 Hydroxylgruppen und einem Molekulargewicht von 18 bis 2.000 g/mol eingesetzt werden.

4. Verfahren nach Anspruch 3, bei dem als Starterverbindungen mit aktiven Wasserstoffatomen oligomere propoxylierte Starterverbindungen mit 1 bis 8 Hydroxylgruppen und zahlenmittleren Molekulargewichten von 200 bis 2.000 g/mol eingesetzt werden.

5. Verfahren nach einem der Ansprüche 1 bis 4, bei dem der DMC-Katalysator in Konzentrationen von 0,001 Gew.-% bis 0,1 Gew.-%, bezogen auf die Menge des herzustellenden Polyetherpolyols, eingesetzt wird.

**Claims**

1. Process for the preparation of polyether polyols by DMC-catalysed polyaddition of alkylene oxides to starter compounds having active hydrogen atoms, in which alkylene oxide is supplied in continuous manner to the reactor during the induction phase and the pressure in the reactor is held constant.

2. Process according to Claim 1, in which the total quantity of starter compound and catalyst necessary for the preparation of the polyether polyols is in the initial reactor charge on commencement of the reaction.

3. Process according to Claim 1 or 2, in which starter compounds having 1 to 8 hydroxyl groups and a molecular weight of 18 to 2,000 g/mol are used.

4. Process according to Claim 3, in which propoxylated oligomer starter compounds having 1 to 8 hydroxyl groups and number average molecular weights of 200 to 2,000 g/mol are used as starter compounds having active hydrogen atoms.

5. Process according to one of Claims 1 to 4, in which the DMC catalyst is used at concentrations of from 0.001 wt.% to 0.1 wt.%, in relation to the quantity of polyether polyol to be prepared.

**Revendications**

1. Procédé pour la préparation de polyéther-polyols par polyaddition, à l'aide de catalyseurs du type cyanure métallique double, d'oxydes d'alkylène sur des composés à atomes d'hydrogène actifs dans lequel, au cours de la phase d'induction, on introduit en continu l'oxyde d'alkylène dans le réacteur et on maintient constante la pression dans la réacteur.

2. Procédé selon la revendication 1, dans lequel on introduit dans le réacteur, au début de la réaction, les quantités totales de composé de départ et de catalyseur nécessaires pour la préparation des polyéther-polyols.

3. Procédé selon la revendication 1 ou 2, dans lequel on met en oeuvre des composés de départ contenant 1 à 8 groupes hydroxy et ayant un poids moléculaire de 18 à 2 000 g/mol.

4. Procédé selon la revendication 3, dans lequel on met en oeuvre en tant que composés de départ à atomes d'hydrogène actifs des composés propoxylés oligomères contenant 1 à 8 groupes hydroxy et ayant des poids moléculaires moyens, moyenne en nombre, de 200 à 2 000 g/mol.

5. Procédé selon une des revendications 1 à 4, dans lequel le catalyseur du type cyanure métallique double est mis en oeuvre à des concentrations de 0,001 % en poids à 0,1 % en poids par rapport à la quantité du polyéther-polyol en cours de préparation.

A: kontinuierliche Dosierung

B: diskontinuierliche Dosierung

**Fig. 1**